# EUROPEAN PATENT SPECIFICATION

(11) **EP 0 939 532 B1**
(45) Date of publication and mention of the grant of the patent: **20.04.2005**
(21) Application number: 99301236.8
(22) Date of filing: 19.02.1999
(51) Int. Cl.: H04M 1/02, H04M 1/22

(54) **Display assembly for a communication unit**
Anzeigevorrichtung für eine Kommunikationseinheit
Dispositif d'affichage pour une unité de communication

(30) Priority: 27.02.1998 GB 9804278
(43) Date of publication of application: 01.09.1999
(73) Proprietor: Nokia Corporation, 02150 Espoo (FI)
(72) Inventor: Poulsen, Bent, 3650 Olstykke (DK)
(74) Representative: Read, Matthew Charles

(56) References cited:
- EP-A- 0 310 889
- EP-A- 0 709 714
- EP-A- 0 789 473
- WO-A-97/32423
- WO-A-97/39533
- WO-A-97/50014
- GB-A- 2 192 084

## Description

The invention relates to a display assembly for a communication unit, such as a cellular phone. When the display assembly includes a liquid crystal display (LCD), the display screen is backlighted to obtain a good contrast in the display. In general, the LCD is connected to the printed circuit board PCB of the unit via a flex print or a connector. However, the liquid crystals are provided on a glass, and the display is therefore quite fragile.

In order to protect the LCD some phones are formed foldable with the LCD protected in the folded position, and other phones are provided with a separate protection window aligned with and at a distance from the LCD. The protection window is fixed to the front cover of the phone prior to the assembling of the phone. The front cover may be received and handled as a unit from a sub-supplier.

This causes problems of dust between the protection window and the LCD. The production line has to be very clean to avoid this dust problem. Furthermore the pre-assembling of the front cover/protection window has to be handled under dustless conditions, too, to avoid dust on the pre-assembled items. The transport from the pre-assembling line to the production line has to be done under dustless conditions, too.

A conventional method of assembling display elements at the same time as the rest of the communication unit is disclosed in WO-A-9750014. The need of a gasket between the protection window and the display screen to provide protection against dust is also described. A method of assembling a display system for a communication unit is disclosed in EP-A-0310889. However, due to the means with which the display system is attached to the front cover of the phone, the display system cannot be assembled separately from the front cover.

According to the invention there is provided a method of assembling a display assembly for a communication unit, comprising the steps of sandwiching a display module including a display screen between a protection window and a plate-shaped, light-guiding member for back lighting said display screen whereby a cavity is created between the display screen and the protection window; and locking said sandwich structure together by coupling means characterised by pre-assembling the display assembly whereby it is assembled before the assembly of the communication unit into a self-carrying structure, and utilising the coupling means to lock the sandwich structure into the self-carrying structure.

According to the invention there is also provided a method of manufacturing a communication unit characterised in that the elements of the display assembly for the communication unit are pre-assembled as an individual item before being fed to the assembly line.

Once the display assembled is completed no dust can enter the cavity. Thus, the assembly of the communication unit on the assembly line can be performed in an environment which is less free of dust than the environment in which the display assembly is pre-assembled.

According to the invention there is further provided a display assembly for a communication unit,comprising a protection window, a display module including a display screen, and a back lighting means including a plate-shaped, light-guiding member for back lighting said display screen; and coupling means for maintaining said display module sandwiched between said protection window and said back lighting means, whereby a cavity is created between the display screen and the protection window characterised by the coupling means being configured to lock the sandwich structure into a self-carrying structure, the display assembly, comprising said self-carrying structure, being pre-assembled such that it can be handled as a single item upon assembly of the communication unit and being constructed such that the assembly of said communication unit can be executed without disassembly of said self-carrying structure.

The display assembly, when assembled, may be transported under the same conditions as all other pre-assemblies, e.g. buzzers, batteries, microphones, of communication units, such as e.g. hand portable phones.

Hence, the invention provides a new and improved method according to which a display assembly for a communication unit may be assembled without any problems of dust between the display screen and the protection window.

The invention also provides a display assembly that is easy to handle during the assembling of the communication unit.

The invention also provides a display assembly having a robust interface to the rest of the communication unit.

According to a preferred embodiment of the display assembly according to the invention the light sources for back lighting the display screen are integrated in the assembly. A number of light emitting diodes (LED) is mounted on a printed circuit board connected to the display module offset from the display screen. Depressions or holes in the plate-shaped, light-guiding member are provided for receiving said diodes at least partially. The coupling of light into the light guide is hereby independent of the relative position between the display assembly and the printed circuit board of the communication unit. The complexity of the mechanical interface between these two parts is reduced.

The protection window is provided with a slight dome shape to increase its strength and to create a cavity between the rear side of the window and the front side of the display screen. For example for a phone the display is not protected by a cover when the phone is not in use. The resilient properties of the protection window ensure that the display screen will not be crashed in normal handling. By providing a resilient dust seal between the protection window and the display unit along the periphery of the display screen it is ensured that the display screen will not be crashed even when subjected to rough handling. At the same time the cavity inside the assembly will be dustproof.

Preferably, the coupling means are provided on the plate-shaped, light-guiding member and the protection window as a number of plastics lugs and tabs for mutual engagement. These lugs may be in the form of gripping walls extending substantially perpendicularly to the plane of the display screen along two opposite sides of the light-guiding member. When the gripping walls are provided with recesses for receiving corresponding tabs of the protection window, unintended disassembling in the stacking direction is avoided. Unintended torsion of the parts is prevented by the reception of the tabs in the recesses.

Due to the resilient properties of the parts when provided by injection molding the gripping walls will establish a snap connection with the tabs according to the preferred embodiment. By extending the gripping walls on both sides of the plate-shaped, light-guiding member the snap connection may be temporarily locked by preventing movement of the gripping wall parts facing away from the protection window. By using these gripping wall parts facing away from the protection window as guide tracks for a printed circuit board received between the walls after the assembly of the phone, the protection window will be retained securely during normal use of the phone.

The rear side of the plate-shaped, light-guiding member is coated with a reflecting layer which prevents light from escaping via the rear side of the assembly.

The printed circuit board carrying the light emitting diodes is provided along one side of the display screen on the display unit, and, according to the preferred embodiment, said printed circuit board also carries the display driver and a multi-pin connector part for establishing electrical connections with a communication unit in which the assembly is used. The plate-shaped, light-guiding member is extended with a carrier part supporting said display driver carrying said printed circuit board. This carrier part is provided with aligning means and fastening means for aligning and fastening the assembly in relation to the communication unit in which the assembly is used.

Fig. 1 is a perspective view of a preferred embodiment of the communication unit according to the invention.

Fig. 2 is an exploded view of the essential parts of the communication unit shown in fig. 1.

Fig. 3 is a view of a preferred embodiment of a pre-assembled display assembly according to the invention.

Fig. 4 is an exploded view of the pre-assembled display assembly shown in fig. 3.

Fig. 5 is a partially cross-sectional view on an enlarged scale of a part of the pre-assembled display assembly shown in fig. 3.

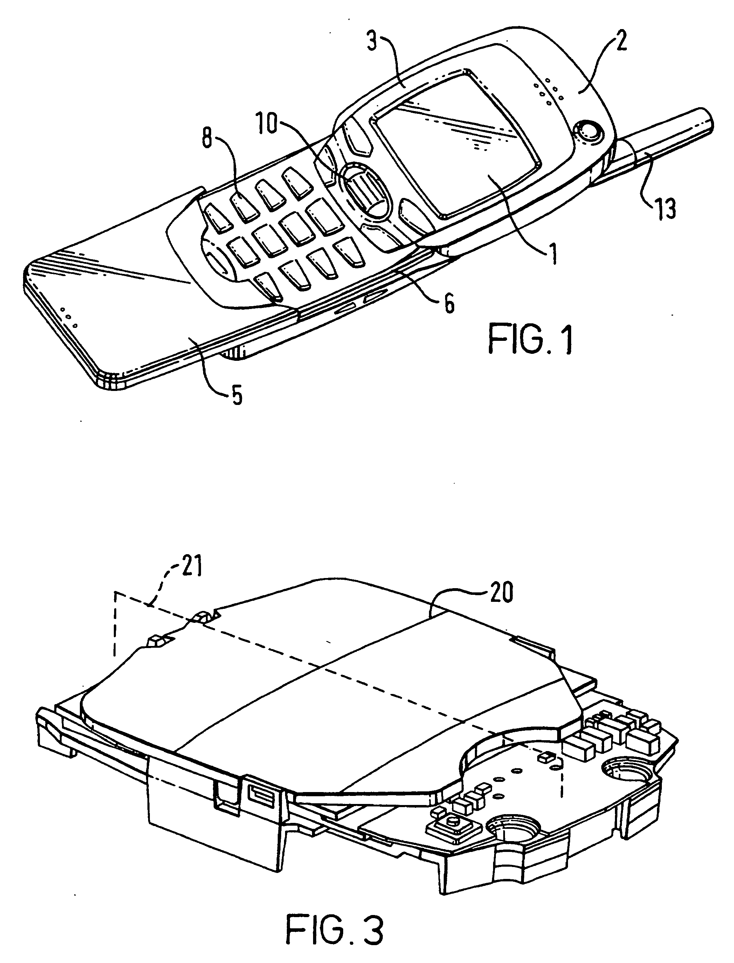

According to a first aspect of the invention the pre-assembled display assembly is integrated into a hard portable phone, e.g. a cellular phone. A preferred embodiment of this phone is shown in fig. 1. As will be seen, the phone is provided with front cover 2 having a window frame 3 encircling the protection window of the display assembly 1. The front cover 2 is formed by injection molding in polycarbonate (PC), acrylonitrile butadiene styrene (ABS) or other robust plastics. The window frame 3 is formed by injection molding in e.g. ABS and then metalized. It will furthermore be seen how the phone is provided with a slide cover 5 snapped onto a metal slide frame 6 sliding in slide tracks 7 in the front cover 2 along a keypad area and in extension thereof

The front cover 2 is provided with a plurality of openings, the largest one being an opening 4 in which the protection window 14 of the display assembly 1 is received. In the keypad area the front cover 2 is provided with sixteen openings through which the keys of a keypad 8 extend. A navigation key assembly 10 extends partly through the front cover 2 between the other keys and the display.

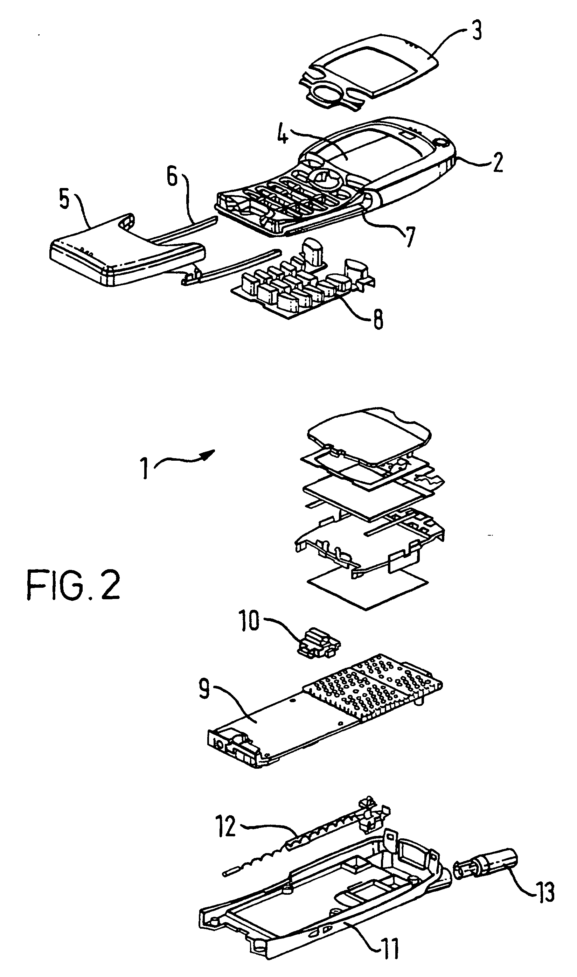

As will be seen from fig. 2, the keypad 8, the navigation key assembly 10 and the display assembly 1 rest on and are electrically connected to a printed circuit board (PCB) 9 of the phone.

An antenna 13 is mounted in the top comer of a back cover 11 and is connected to the RF circuit on the PCB 9. A spring based/latch based slide release mechanism 12 is included along one of the side walls of the back cover 11. One end of the slide release mechanism 12 is fixed to the metal slide frame 6. When the latch mechanism (not shown) is released, the spring of the slide release mechanism forces the slide to open in a soft movement.

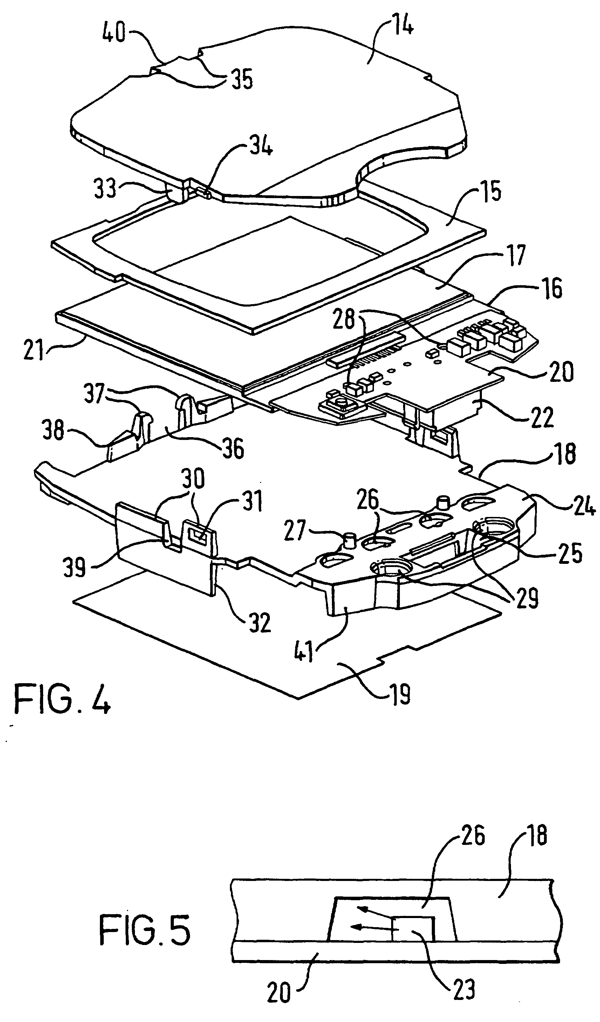

The display assembly 1 according to the invention will be explained in detail in the following with reference to figs. 3-5. The protection window 14 is injection molded in a clear and mechanically resistant plastics material, such as clear polymethyl methacrylate (PMMA). The protection window 14 covers and protects a display screen, e.g. an LCD display 17, provided on a display module 16. A dust seal 15 of punched foam provided with an appropriate adhesive is inserted along the edge of the LCD display 17 between the display module 16 and the window 14.

As will be seen from two virtual lines 20 and 21 in fig. 3 - the first one follows the curvature of the window and the second one is straight - the protection window 14 is provided with a slight dome shape to increase its strength and to create a cavity between the window 14 and the LCD display 17. The resilient properties of the window 14 will protect the LCD display 17, and the presence of the foamed dust seal 15 (works as a shock absorber) will increase this protection significantly.

In addition, the dust seal 15 effectively maintains a dustless cavity between the window 14 and the display module 17 once the pre-assembling has been performed under dustless conditions. The LCD display 17 is provided on a glass plate 21 (support for the display 17) as a liquid crystal structure know per se and having connectors arranged in a matrix configuration. In addition to the glass plate 21 and the display 17, the display module 16 comprises a small PCB 20 carrying a multi-pin connector part 22 for connecting the display assembly 1 with a corresponding connector part on the PCB 9. By providing the connectors in the connector part 22 as a microball grid array with resilient pins the connectors in the corresponding connector part on the PCB 9 may be metallic pads.

In addition to the connector 22, the small PCB 20 carries some components for an LCD driver circuit (just schematically illustrated) and four light emitting diodes (LED) 23 (shown schematically in fig. 5). These circuits will be trivial to a person skilled in the art.

The back side of the fragile glass plate 21 is supported by a plate-shaped, light-guiding member 18 provided by injection molding in a clear light-guiding plastics material e.g. PC (polycarbonate) or PMMA. The plate-shaped, light-guiding member 18 is extended with a carrier part 24 which supports the PCB 20. The carrier part 24 is provided with a channel 25 in which the connector part 22 is received. The carrier part 24 rests on the PCB 9, and the length of the channel 25 ensures a well-defined pressure which acts on the connector pins. When the connector part 22 fits into the channel 25, a transversal displacement of the connector pins is avoided as the position of the carrier part 24 relatively to the PCB 9 is controlled.

The carrier part 24 is furthermore provided with cavities 26 or holes to receive the LED's 23 on the PCB 20. When the LED's 23 emit light in the direction of the arrow (fig. 5), the light enters the light-guiding member 18 for illuminating or back lighting the display screen 17. A reflector 19 is adhered to the back side of the light-guiding member to reduce loss of light. The carrier part 24 is provided with tabs 27 interacting with corresponding holes 28 in the PCB 20. This reduces the risk of damage to the connector 22 if the phone is dropped.

On each side of the channel 25 the carrier part 24 is provided with two bushings 29 having substantially the same length as the channel 25. During the assembling the display assembly 1 is placed in a front cover 2 positioned with its face downwards. The keypad 8 and the navigation key 10 have already been placed in the front cover 2. Then the PCB 9 is placed on the top of the assembled parts. Screws (not shown) are passed through holes in the PCB 9 and the bushing 29 into screw towers (not shown) in the rear side of the front cover 2. Hereby the pre-assembled display assembly will be fixed to the front cover 2 and the PCB 9. After this the back cover 11 including the antenna 13 is placed on the PCB 9, and the front cover and the back cover are fixed to each other by means of screws (not shown).

According to the preferred embodiment, the coupling means for maintaining the display module 16 sandwiched between the protection window 14 and the light-guiding member 18 of the back lighting means are mainly provided along the edge of the light-guiding member 18.

It will be seen from fig. 4 how the light-guiding member 18 is provided with two wall parts 30 along the two sides in parallel with the longitudinal axis of the phone. The wall parts 30 extend in the building direction of the display assembly 1 and are divided by a cut 39. One of the wall parts 30 is formed with an eye 31, whereby a resilient lug for a snap connection is provided. The height of the wall parts 30 corresponds to the overall thickness of the display assembly 1, whereby the top of the wall parts 30 are aligned with the protection window 14. The protection window 14 has tabs 34 fitting into the eyes 31. The wall parts 30 provided with eyes 31 and the tabs 34 provide a snap connection based coupling means for locking the sandwich structure together to a self-carrying structure.

Another tab 33 is received in the cut 39 between the wall parts 30, whereby torsion between the protection window and the light-guiding member 18 is avoided. The protection window 14 is provided with two cuts 35 defining a tab 40 which, during the assembling of the display assembly 1, is received and fixed in a recess 36 between two hooks 37. Two stops 38 act as supports for the protection window 14.

The wall parts 30 extend in downwardly directed wall parts 32 which straddle the PCB 9. Via the wall parts 32 the display assembly rests against the back cover 11. When a force is applied to the protection window 14, the wall parts 30, 32 of the light-guiding member transfer the force directly to the back cover 11 of the phone. This prevents a force acting on the protection window 14 from being transferred to the PCB 9.

In view of the foregoing description it will be evident to a person skilled in the art that various modifications may be made within the scope of the invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during prosecution of this application or any such further application derived therefrom.

## Claims

1. A method of assembling a display assembly (1) for a communication unit, comprising the steps of sandwiching a display module (16) including a display screen (17) between a protection window (14) and a plate-shaped, light-guiding member (18) for back lighting said display screen (17) whereby a cavity is created between the display screen and the protection window; and
locking said sandwich structure together by coupling means (27, 28, 30-40) **characterised by**
pre-assembling the display assembly whereby it is assembled before the assembly of the communication unit into a self-carrying structure, and
utilising the coupling means to lock the sandwich structure into the self-carrying structure.

2. A method according to claim 1, wherein the locking is provided by snap coupling the sandwich structure together.

3. A method of manufacturing a communication unit comprising the steps of:
feeding display elements for a display assembly (1), comprising a display screen (17), a protection window (14) and light-guiding member (18), to an assembly line;
placing the display elements inside a first cover part (11) of the communication unit and establishing an electrical connection to a circuit board (9) of the communication unit;
placing a second cover part (2) of the communication unit for enclosing the display assembly in such a way that the protection window (14) is received in an opening (4) of one of said cover parts (2) through which the display screen (17) is visible **characterised in that**
the display elements (14, 17, 18) of the display assembly are pre-assembled as an individual item before being fed to the assembly line and the pre-assembly is performed according to claim 1 or 2.

4. A method according to claim 3 including assembling the communication unit on the assembly line in an environment which is less free of dust than the environment in which the display assembly (1) is pre-assembled.

5. A display assembly for a communication unit comprising:
a protection window (14);
a display module (16) including a display screen (17); and
a back lighting means including a plate-shaped, light-guiding member for back lighting said display screen (18); and
coupling means (30-40) for maintaining said display module sandwiched between said protection window and said back lighting means, whereby a cavity is created between the display screen and the protection window **characterised by**
the coupling means (30-40) being configured to lock the sandwich structure into a self-carrying structure,
the display assembly, comprising said self-carrying structure, being pre-assembled such that it can be handled as a single item upon assembly of the communication unit and being constructed such that the assembly of said communication unit can be executed without disassembly of said self-carrying structure.

6. A display assembly according to claim 5, wherein the back lighting means (18) comprises a number of light emitting diodes (LED, 23) mounted on a printed circuit board (20) connected to the display module offset from the display screen (17) and depressions or holes (26) in the plate-shaped, light-guiding member for receiving said diodes (23) at least partially.

7. A display assembly according to claim 5 or 6, wherein the protection window (14) is provided with a dome shape to increase the strength and to create a cavity between the protection window and the display screen (17).

8. A display assembly according to any one of claims 5 to 7, wherein a dust seal (15) is provided between the protection window and the display unit along the periphery of the display screen.

9. A display assembly according to claim 8, wherein the dust seal (15) is provided by punched plastics foam coated with an adhesive.

10. A display assembly according to any one of claims 5 to 9, wherein the coupling means (30-40) are provided on the plate-shaped, light-guiding member and the protection window as a number of plastics lugs and tabs for mutual engagement (27, 28, 31, 33-37, 39, 40).

11. A display assembly according to claim 10, wherein the plate-shaped, light-guiding member (18) is provided with gripping walls (30, 32) extending substantially perpendicularly to the plane of the display screen (17) along two opposite sides thereof, and the gripping walls are provided with recesses (39) for receiving corresponding tabs of the protection window.

12. A display assembly according to claim 11, wherein the gripping walls (30, 32) on the plate-shaped, light-guiding member (18) and the tabs (33, 34, 40) on the protection window establish a snap connection when assembling the assembly with the display unit sandwiched there between.

13. A display assembly according to claim 11 or 12, wherein the gripping walls extend (30, 32) on both sides of the plate-shaped, light-guiding member (18), whereby the snap connection may be temporarily locked by preventing movement of the griping wall parts facing away from the protection window.

14. A display assembly according to any one of the claims 5 to 13, wherein the side of the plate-shaped, light-guiding member (18) facing away from the protection window (14) is provided with a reflecting layer (19) which prevents light from escaping via the side of the assembly facing away from the protection window.

15. A display assembly according to any one of claims 6 to 14, wherein the printed circuit board (20) carrying the light emitting diodes (23) is provided along one side of the display screen (17) on the display unit (16), and said printed circuit board (20) also carries the display driver and a multi-pin connector part (22) for establishing electrical connections with a communication unit in which the assembly is used.

16. A display assembly according to claim 15, wherein the plate-shaped, light-guiding member (18) is extended with a carrier part (24) supporting said display driver carrying the printed circuit board (20), and provided with aligning means and fastening means (25, 27, 28) for aligning and fastening the assembly in relation to the communication unit in which the assembly is used.

## Patentansprüche

1. Verfahren zum Montieren einer Anzeigebaueinheit (1) für eine Kommunikationseinheit, das die Schritte umfasst, bei denen ein Anzeigemodul (16), das einen Anzeigeschirm (17) aufweist, zwischen einem Schutzfenster (14) und einem plattenförmigen Lichtführungselement (18) für die Hintergrundbeleuchtung des Anzeigeschirms (17) sandwichartig eingefügt wird, wobei zwischen dem Anzeigeschirm und dem Schutzfenster ein Hohlraum geschaffen wird; und
die Sandwichstruktur durch Kopplungsmittel (27, 28, 30-40) verriegelt wird, **gekennzeichnet durch**
Vormontieren der Anzeigebaueinheit, wodurch sie montiert wird, bevor die Kommunikationseinheit in eine selbsttragende Struktur eingefügt wird, und
Verwenden der Kopplungsmittel, um die Sandwichstruktur in der selbsttragenden Struktur zu verriegeln.

2. Verfahren nach Anspruch 1, bei dem die Verriegelung durch Zusammenkoppeln der Sandwichstruktur durch Einrasten geschaffen wird.

3. Verfahren zum Herstellen einer Kommunikationseinheit, das die folgenden Schritte umfasst:
Zuführen von Anzeigeelementen für eine Anzeigebaueinheit (1), die einen Anzeigeschirm (17), ein Schutzfenster (14) und ein Lichtführungselement (18) umfasst, zu einer Montagelinie;
Anordnen der Anzeigeelemente in einem ersten Abdeckteil (11) der Kommunikationseinheit und Aufbauen einer elektrischen Verbindung mit einer Leiterplatte (9) der Kommunikationseinheit;
Anordnen eines zweiten Abdeckteils (2) der Kommunikationseinheit, um die Anzeigebaueinheit in der Weise zu umschließen, dass das Schutzfenster (14) in einer Öffnung (4) eines der Abdeckteile (2) aufgenommen wird, durch die der Anzeigeschirm (17) sichtbar ist, **dadurch gekennzeichnet, dass**
die Anzeigeelemente (14, 17, 18) der Anzeigebaueinheit zu einem einzigen Bauelement vormontiert werden, bevor sie der Montagelinie zugeführt werden, und die Vormontage nach Anspruch 1 oder 2 ausgeführt wird.

4. Verfahren nach Anspruch 3, das das Montieren der Kommunikationseinheit in der Montagelinie in einer Umgebung, die weniger staubfrei als die Umgebung ist, in der die Anzeigebaueinheit (1) vormontiert wird, umfasst.

5. Anzeigebaueinheit für eine Kommunikationseinheit, die umfasst:
ein Schutzfenster (14);
ein Anzeigemodul, das einen Anzeigeschirm (17) aufweist; und
Hintergrundbeleuchtungsmittel, die ein plattenförmiges Lichtführungselement für die Hintergrundbeleuchtung des Anzeigeschirms (18) aufweisen; und
Kopplungsmittel (30-40), die das Anzeigemodul zwischen dem Schutzfenster und den Hintergrundbeleuchtungsmitteln sandwichartig halten, wodurch zwischen dem Anzeigeschirm und dem Schutzfenster ein Hohlraum geschaffen wird, **dadurch gekennzeichnet, dass**
die Kopplungsmittel (30-40) so konfiguriert sind, dass sie die Sandwichstruktur zu einer selbsttragenden Struktur verriegeln,
die Anzeigebaueinheit, die die selbsttragende Struktur umfasst, vormontiert wird, so dass sie bei der Montage der Kommunikationseinheit als eine einzige Baueinheit gehandhabt werden kann, und so konstruiert ist, dass die Montage der Kommunikationseinheit ohne Zerlegen der selbsttragenden Struktur ausgeführt werden kann.

6. Anzeigebaueinheit nach Anspruch 5, bei der die Hintergrundbeleuchtungsmittel (18) zahlreiche lichtemittierende Dioden (LED, 23) umfassen, die auf einer gedruckten Leiterplatte (20) montiert sind, die mit dem Anzeigemodul versetzt von dem Anzeigeschirm (17) verbunden ist, und Vertiefungen oder Löcher (26) in dem plattenförmigen Lichtführungselement umfassen, um die Dioden (23) wenigstens teilweise aufzunehmen.

7. Anzeigebaueinheit nach Anspruch 5 oder 6, bei der das Schutzfenster (17) kuppelförmig ist, um die Festigkeit zu erhöhen und um zwischen dem Schutzfenster und dem Anzeigeschirm (17) einen Hohlraum zu schaffen.

8. Anzeigebaueinheit nach einem der Ansprüche 5 bis 7, bei der zwischen dem Schutzfenster und der Anzeigeeinheit längs des Umfangs des Anzeigeschirms eine Staubdichtung (15) vorgesehen ist.

9. Anzeigebaueinheit nach Anspruch 8, bei der die Staubdichtung (15) durch einen porösen Kunststoffschaum, der mit Klebstoff beschichtet ist, geschaffen ist.

10. Anzeigebaueinheit nach einem der Ansprüche 5 bis 9, bei der die Kopplungsmittel (30-40) auf dem plattenförmigen Lichtführungselement vorgesehen sind und das Schutzfenster zahlreiche Kunststoffösen und -nasen für einen gegenseitigen Eingriff (27, 28, 31, 33-37, 39, 40) besitzt.

11. Anzeigebaueinheit nach Anspruch 10, bei der das plattenförmige Lichtführungselement (18) mit Greifwänden (30, 32) versehen ist, die sich im Wesentlichen senkrecht zu der Ebene des Anzeigeschirms (17) längs zweier gegenüberliegender Seiten hiervon erstrecken, und die Greifwände mit Aussparungen (39) für die Aufnahme entsprechender Nasen des Schutzfensters versehen sind.

12. Anzeigebaueinheit nach Anspruch 11, bei der die Greifwände (30, 32) an dem plattenförmigen Lichtführungselement (18) und die Nasen (33, 34, 40) an dem Schutzfenster eine Einrastverbindung schaffen, wenn die Baueinheit mit der dazwischen angeordneten Anzeigeeinheit montiert wird.

13. Anzeigebaueinheit nach Anspruch 11 oder 12, bei der sich die Greifwände (30, 32) beiderseits des plattenförmigen Lichtführungselements (18) erstrecken, wobei die Einrastverbindung vorübergehend verriegelt werden kann, indem eine Bewegung der Greifwandteile, die von dem Schutzfenster weggerichtet sind, verhindert wird.

14. Anzeigebaueinheit nach einem der Ansprüche 5 bis 13, bei der die Seite des plattenförmigen Lichtführungselements (18), die von dem Schutzfenster (14) weggerichtet ist, mit einer reflektierenden Schicht (19) versehen ist, die verhindert, dass Licht durch die Seite der Baueinheit, die von dem Schutzfenster weggerichtet ist, entweicht.

15. Anzeigebaueinheit nach einem der Ansprüche 6 bis 14, bei der die gedruckte Leiterplatte (20), die die lichtemittierenden Dioden (23) trägt, längs einer Seite des Anzeigeschirms (17) an der Anzeigeeinheit (16) vorgesehen ist und die gedruckte Leiterplatte (20) außerdem den Anzeigetreiber und ein Multipin-Verbinderteil (22) für die Bildung elektrischer Verbindungen mit einer Kommunikationseinheit, in der die Baueinheit verwendet wird, trägt.

16. Anzeigebaueinheit nach Anspruch 15, bei der das plattenförmige Lichtführungselement (18) durch ein Trägerteil (24) verlängert ist, das den Anzeigetreiber unterstützt und die gedruckte Leiterplatte (20) trägt, und mit Ausrichtmitteln und Befestigungsmitteln (25, 27, 28) versehen ist, um die Baueinheit in Bezug auf die Kommunikationseinheit, in der die Baueinheit verwendet wird, auszurichten und zu befestigen.

## Revendications

1. Procédé d'assemblage d'un ensemble d'affichage (1) pour une unité de communication, comprenant les étapes consistant à intercaler un module d'affichage (16) comprenant un écran d'affichage (17) entre une fenêtre de protection (14) et un élément de guidage de lumière (18) en forme de plaque pour rétroéclairer ledit écran d'affichage (17), moyennant quoi une cavité est créée entre l'écran d'affichage et la fenêtre de protection ; et
verrouiller ladite structure en sandwich par des moyens d'accouplement (27, 28, 30 à 40), **caractérisé par**
le préassemblage de l'ensemble d'affichage, moyennant quoi il est assemblé avant l'assemblage de l'unité de communication en une structure autonome, et
l'utilisation des moyens d'accouplement pour verrouiller la structure en sandwich en une structure autonome.

2. Procédé selon la revendication 1, dans lequel le verrouillage est réalisé par un accouplement par pression de la structure en sandwich.

3. Procédé de fabrication d'une unité de communication comprenant les étapes consistant à :
fournir des éléments d'affichage pour un ensemble d'affichage (1), comprenant un écran d'affichage (17), une fenêtre de protection (14) et un élément de guidage de lumière (18), à une ligne d'assemblage ;
placer les éléments d'affichage à l'intérieur d'une première partie de recouvrement (11) de l'unité de communication et établir une connexion électrique avec une carte de circuit (9) de l'unité de communication ;
placer une deuxième partie de recouvrement (2) de l'unité de communication pour enfermer l'ensemble d'affichage de manière à ce que la fenêtre de protection (14) soit reçue dans une ouverture (4) de l'une desdites parties de recouvrement (2) à travers laquelle l'écran d'affichage (17) est visible, **caractérisé en ce que**
les éléments d'affichage (14, 17, 18) de l'ensemble d'affichage sont préassemblés en tant qu'élément individuel avant d'être fournis à la ligne d'assemblage, et le préassemblage est effectué selon la revendication 1 ou 2.

4. Procédé selon la revendication 3, comprenant l'assemblage de l'unité de communication sur la ligne d'assemblage dans un environnement qui est moins exempt de poussière que l'environnement dans lequel l'ensemble d'affichage (1) est préassemblé.

5. Ensemble d'affichage pour une unité de communication comprenant :
une fenêtre de protection (14) ;
un module d'affichage (16) comprenant un écran d'affichage (17) ; et
des moyens de rétroéclairage comprenant un élément de guidage de lumière en forme de plaque pour rétroéclairer ledit écran d'affichage (18) ; et
des moyens d'accouplement (30 à 40) pour maintenir ledit module d'affichage intercalé entre ladite fenêtre de protection et lesdits moyens de rétroéclairage, moyennant quoi une cavité est créée entre l'écran d'affichage et la fenêtre de protection, **caractérisé par**
les moyens d'accouplement (30 à 40) étant configurés pour verrouiller la structure en sandwich en une structure autonome,
l'ensemble d'affichage, comprenant ladite structure autonome, étant préassemblé de sorte qu'il puisse être manipulé en tant qu'élément unique lors de l'assemblage de l'unité de communication et étant construit de sorte que l'assemblage de ladite unité de communication puisse être exécuté sans désassembler ladite structure autonome.

6. Ensemble d'affichage selon la revendication 5, dans lequel les moyens de rétroéclairage (18) comprennent un certain nombre de diodes électroluminescentes (LED, 23) montées sur une carte de circuit imprimé (20) connectée au module d'affichage, décalée de l'écran d'affichage (17), et des creux ou trous (26) dans l'élément de guidage de lumière en forme de plaque pour recevoir lesdites diodes (23) au moins partiellement.

7. Ensemble d'affichage selon la revendication 5 ou 6, dans lequel la fenêtre de protection (14) est pourvue d'une forme bombée pour augmenter la résistance et pour créer une cavité entre la fenêtre de protection et l'écran d' affichage (17).

8. Ensemble d'affichage selon l'une quelconque des revendications 5 à 7, dans lequel un joint anti-poussière (15) est prévu entre la fenêtre de protection et l'unité d'affichage le long de la périphérie de l'écran d'affichage.

9. Ensemble d'affichage selon la revendication 8, dans lequel le joint anti-poussière (15) est réalisé par une mousse plastique poinçonnée revêtue d'un adhésif.

10. Ensemble d'affichage selon l'une quelconque des revendications 5 à 9, dans lequel les moyens d'accouplement (30 à 40) sont prévus sur l'élément de guidage de lumière en forme de plaque et la fenêtre de protection en tant qu'un certain nombre de languettes et de pattes en plastique pour une mise en prise mutuelle (27, 28, 31, 33 à 37, 39, 40).

11. Ensemble d'affichage selon la revendication 10, dans lequel l'élément de guidage de lumière (18) en forme de plaque est pourvu de parois de serrage (30, 32) s'étendant sensiblement perpendiculairement au plan de l'écran d'affichage (17) le long de deux côtés opposés de celui-ci, et les parois de serrage sont pourvues d'évidements (39) pour recevoir des pattes correspondantes de la fenêtre de protection.

12. Ensemble d'affichage selon la revendication 11, dans lequel les parois de serrage (30, 32) sur l'élément de guidage de lumière (18) en forme de plaque et les pattes (33, 34, 40) sur la fenêtre de protection établissent une connexion par pression lors de l'assemblage de l'ensemble avec l'unité d'affichage intercalée entre ceux-ci.

13. Ensemble d'affichage selon la revendication 11 ou 12, dans lequel les parois de serrage (30, 32) s'étendent des deux côtés de l'élément de guidage de lumière (18) en forme de plaque, moyennant quoi la connexion par pression peut être verrouillée temporairement en empêchant un mouvement des parties de la paroi de serrage orientées à l'opposé de la fenêtre de protection.

14. Ensemble d'affichage selon l'une quelconque des revendications 5 à 13, dans lequel le côté de l'élément de guidage de lumière (18) en forme de plaque orienté à l'opposé de la fenêtre de protection (14) est pourvu d'une couche réfléchissante (19) qui empêche la lumière de s'échapper par l'intermédiaire du côté de l'ensemble orienté à l'opposé de la fenêtre de protection.

15. Ensemble d'affichage selon l'une quelconque des revendications 6 à 14, dans lequel la carte de circuit imprimé (20) supportant les diodes électroluminescentes (23) est prévue le long d'un côté de l'écran d'affichage (17) sur l'unité d'affichage (16), et ladite carte de circuit imprimé (20) supporte également le dispositif de commande d'affichage et une partie de connecteur multibroche (22) pour établir des connexions électriques avec une unité de communication dans laquelle l'ensemble est utilisé.

16. Ensemble d'affichage selon la revendication 15, dans lequel l'élément de guidage de lumière (18) en forme de plaque est prolongé par une partie de support (24) supportant ladite carte de circuit imprimé (20) supportant le dispositif de commande d'affichage, et est pourvu de moyens d'alignement et de moyens de fixation (25, 27, 28) pour aligner et fixer l'ensemble en relation avec l'unité de communication dans laquelle l'ensemble est utilisé.
